(19) Europäisches Patentamt / European Patent Office / Office européen des brevets

(11) **EP 1 962 452 A1**

(12) **EUROPEAN PATENT APPLICATION**

(43) Date of publication:
   **27.08.2008   Bulletin 2008/35**

(51) Int Cl.:
   **H04L 1/24** (2006.01)      **H04L 25/02** (2006.01)

(21) Application number: **07075145.8**

(22) Date of filing: **22.02.2007**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK RS**<br><br>(71) Applicant: **Omron Europe B.V.**<br>**2132 JD Hoofddorp (NL)** | (72) Inventors:<br>• **Exoo, Frank Jan**<br>   **5237 KW 's-Hertogenbosch (NL)**<br>• **Van Schie, Chantal Johanna Maria**<br>   **5235 GH 's-Hertogenbosch (NL)**<br><br>(74) Representative: **Dohmen, Johannes Maria Gerardus et al**<br>**Algemeen Octrooi- en Merkenbureau**<br>**P.O. Box 645**<br>**5600 AP  Eindhoven (NL)** |

(54)    **A method, a system, a bus master module and a test module for testing the termination of a differential serial communication bus**

(57)    The invention relates to method and a system for performing the steps of the method of testing the termination of a differential serial communication bus the serial communication bus comprising a first signal line and a second signal line, wherein the bus is fit for termination by a bus terminator of the open-line fail-safe type or the open-line and closed-line fail-safe type, the method comprising the steps of setting the serial communication bus in an idle-mode; electrically connecting a test load between the first signal line and the second signal line; measuring a first voltage on the first signal line; measuring a second voltage on the second signal line; determining a first voltage difference from the first and second voltage; comparing the first voltage difference with a first reference level; generating an incorrect termination signal if the first voltage difference is below the first reference level.

FIG. 2

EP 1 962 452 A1

**Description**

FIELD OF THE INVENTION

The invention relates to a method, a system, a bus master module and a test module for testing the termination of a differential serial communication bus.

PRIOR ART

The use of differential serial communication busses is widespread throughout industry and other areas in the art. These busses are commonly used to interconnect two (point-to-point) or a plurality (multidrop or multipoint) of subsystems like measurement and control equipment and to connect these subsystems to central controllers and data acquisition systems. Well known examples for the skilled person of international standards of such differential serial bus systems are RS422 and RS485.

Communication bus systems of this type provide high speed communication over two electrically differential signal lines. The interconnecting signal lines can be in the form of cables, whereby each subsystem is connected with a new cable, or by means of a single cable having intermediate connectors (multidrop or multipoint) for connecting the subsystems. The subsystems can be in the form of bus modules, which can also be pluggable, whereby the modules are pluggable into a rack having a backplane which interconnects these modules. The bus modules can be packaged, having their own housing, but also printed circuit board assemblies are known. Typical of the interconnection of the bus modules is that the interconnecting lines form a single line bus structure, as contrary to ring or star shaped bus structures.

Usually there is a bus master module which controls the communication on the bus, determining when a (sub- or slave-) module is allowed to send data over the serial communication bus.

The signal lines are to be considered as, or behave as transmission lines having a certain characteristic impedance. For speeds exceeding approximately 200 kbps, or for long interconnection lines, i.e. in excess of 500 m, correct termination at both sides of the single bus structure is required to minimise reflections and disturbances due to noise or EMI (Electro Magnetic Interference) circumstances, especially when the bus is an idle state or in a high impedance state. For this purpose various solutions have been found in the form of bus terminators, to be connected at both ends of the signal lines, having a termination load between the two differential signal lines. The termination load has an impedance value approximately equal to the characteristic impedance of the signal lines.

The termination load can be a (passive) resistor, but also active loads, utilising active components including transistors are known in the art.

A terminator can be a incorporated inside a terminating submodule, arranged as a switchable termination, or can come as an assembly that can be fitted in-between a submodule and a cable connector. A terminator can also be a pluggable module for rack mounted systems.

A special type of termination is achieved when the terminator also has a pull-up resistor, connected between the first signal line of the serial communication bus and a bus power supply, and a pull-down resistor, connected to the second signal line of the serial communication bus and ground. This kind of termination is in the art sometimes referred to as "open-line fail-safe" termination.

A variant of this type of termination, called "Open-line and closed-line fail-safe" termination, has resistors connected in series with the signal lines, between the termination load and the pull-up or pull-down resistors respectively.

These types of termination provide safe, stable signal line voltages when the serial communication bus is idle, i.e. all serial bus drivers are in a high impedance state.

A well known problem for the skilled person in operating differential serial communication busses is that in use, very often the busses are incorrectly terminated. This can be due to the invisibility of the terminators, faults occurring inside terminators, faulty installed systems by unqualified personnel, etcetera.

Occurring faults can be at least one of only a single terminator is present, no terminators are present, short-circuit between signal lines, short circuit between signal lines and ground or power supply, open or no connection between signal line and terminator resistor.

SUMMARY

It is an object of the present invention to provide testing of a differential serial bus, in order to detect termi9nation faults.

The object is achieved in a first aspect of the invention, in a method of testing the termination of a differential serial communication bus, whereby the serial communication bus may comprise a first signal line for carrying a first electrical signal modulated on a first voltage base level and a second signal line for carrying a second electrical signal modulated on a second voltage base level, wherein in use a differential signal between the first and the second signal can be indicative of a serial digital signal being transferred on the communication bus, wherein the bus may be fit for termination by a bus terminator of the open-line fail-safe type or the open-line and closed-line fail-safe type, and wherein the method may comprise the steps of setting the serial communication bus in an idle-mode, electrically connecting a test load between the first signal line and the second signal line, measuring a first voltage on the first signal line, measuring a second voltage on the second signal line, determining a first voltage difference from the first and second voltage, comparing the first voltage difference with a first reference level, generating an incorrect termination signal if the first voltage difference is below the first reference level.

The testing can be performed in a test mode. If the serial bus is terminated correctly with two terminators of the open-line fail-safe type or the open-line and closed-line fail-safe type, in idle mode the voltage across the differential lines before testing is determined by the termination impedance divided by the total impedance of each terminator, irrespective of how many terminators are connected in parallel. The introduction of the test load causes the voltage drop over the signal lines to be reduced. The reduced voltage for two reference terminators and the test load in parallel, determines the first reference level. The voltage difference may be less then the first reference level if there is only one, or no terminator present. A margin in the first reference level may be necessary to prevent false detections.

An advantage of the presented method is that the severity of a failure may be detected, since the voltage difference over the signal lines is less if more terminators are lacking.

A further advantage of this approach is that during testing, the serial communication bus is idle, that is, in a high impedance state. Any circuitry driving the signal lines is switched off. Consequently during testing there is no signal that can in any way bring a receiving submodule on the serial communication bus in an active state or mode receiving a message that could erroneously be interpreted.

The steps of the method can for that purpose be conducted by a master module on the bus, the master being capable of establishing an idle mode, whereby other submodules are passive, or slave modules, and can only set the bus in a low impedance state, i.e. for transmitting data, when prompted to do so by the master module.

The reference level is determined by the impedance ratios of the impedances of a reference terminating module, the load connected to the signal lines, and a bus supply voltage applied to a termination module, as will be described in the detailed description.

In an embodiment according to the first aspect of the invention, the steps of comparing the first voltage difference with a reference level, and generating an incorrect termination message if the voltage difference is below the first reference level, may be repeatable using a plurality of first reference levels.

The reference levels in the plurality of first reference levels may be different. This way more than one fault situations may be detected, thereby increasing ease of maintenance and diagnosis for an engineer having to solve a termination problem.

In an embodiment according to the first aspect of the invention, the method may further comprise the steps of and preceding the step of setting the serial communication bus in an idle-mode: setting the serial communication bus in the idle-mode, connecting two reference bus terminators to the serial communication bus, measuring a third voltage on the first signal line, measuring a fourth voltage on the second signal line, determining a second voltage difference from the third and fourth voltage, determining the first reference level from the second voltage difference.

In this embodiment it is possible in a calibration mode to dynamically determine the required first reference level, which makes the method independent of termination impedance values and bus supply voltage.

In this embodiment, the reference level is derived form a standard termination situation. By applying a margin, the reference level can be derived from the difference voltage.

In a further embodiment according to the first aspect of the invention, comprising the step of electrically connecting the test load between the first and second signal lines, it is possible to determine the reference level directly from the measured voltage difference using only a small noise margin, since the required voltage difference level is achieved under test conditions, i.e. with the test load connected. Again if the voltage difference under that test condition is not obtained, there must be a fault.

In a further embodiment it is possible to repeat the determination of the first reference level under different reference termination sequences. These different reference situations can relate to different fault situations that may occur, like one terminator miss, short circuit or open circuit in the serial bus and terminator configuration.

In a further embodiment according to the first aspect of the invention, the method may further comprise the steps of comparing the first voltage on the first signal line with a third reference level, generating an third incorrect termination signal if the first voltage is below the third reference level.

In a further embodiment according to the first aspect of the invention, the method may further comprise the steps of comparing the first voltage on the first signal line with a fourth reference level, generating an fourth incorrect termination signal if the first voltage is above the fourth reference level.

In a further embodiment according to the first aspect of the invention, the method may further comprise the steps of comparing the second voltage on the second signal line with a fifth reference level, generating an fifth incorrect termination signal if the second voltage is below the fifth reference level.

In a further embodiment according to the first aspect of the invention, the method may further comprise the steps of comparing the second voltage on the second signal line with a sixth reference level, generating an sixth incorrect termination signal if the second voltage is above the sixth reference level.

In a further embodiment according to the first aspect of the invention, the method may further comprise the step of triggering the step of setting the serial communication bus in idle mode, thereby starting the testing of the termination of the serial communication bus. This way it is possible to perform the method of the termination of a differential serial communication bus when it is so desired. This van be periodically at predetermined intervals or at fixed times and/or dates the correct termination of the serial communication bus.

In a further embodiment according to the first aspect of the invention, wherein the step of triggering comprises periodically triggering at predetermined intervals or at fixed times and/or dates.
This way maintenance is made more secure and easy, since this step can be performed automatically or periodically without operator intervention.

In a further embodiment according to the first aspect of the invention, wherein the step of triggering comprises triggering by user control means. This enables a person responsible for testing to initiate testing via the user control means.

In a further embodiment according to the first aspect of the invention, wherein the step of triggering comprises triggering by a system trigger. This enables a system which is to perform or a system connected to it to initiate testing. This system trigger can for example be a system rest signal or a system error signal occurring when a controller detects an error situation.

In a further embodiment of the first aspect of the invention, the method may further comprise the steps of comparing the first voltage on the first signal line with a second reference level, and generating a third incorrect termination signal if the first voltage is below the second reference level.

In a further embodiment of the first aspect of the invention, the method may further comprise the steps of comparing the first voltage on the first signal line with a third reference level, generating a third incorrect termination signal if the first voltage is above the third reference level.

In a further embodiment of the first aspect of the invention, the method may further comprise the steps of comparing the second voltage on the second signal line with a fourth reference level, generating a fourth incorrect termination signal if the second voltage is below the fourth reference level.

In a further embodiment of the first aspect of the invention, the method may further comprise the steps of comparing the second voltage on the second signal line with a fifth reference level, generating a fifth incorrect termination signal if the second voltage difference is above the fifth reference level.

By individually testing the voltage levels of the first and second voltages of the first and second signal lines respectively, it is possible to detect further abnormal situations. If for example a short circuit occurs of a signal line with the bus power supply, that signal line will exhibit a voltage above the normal stationary voltage. Likewise, if there is a short circuit of one of the signal lines with ground, then the measured voltage will be below the normal stationary voltage. The stationary voltage can be calculated from the voltage division by terminators using the impedances of the components in the terminators and the bus supply voltage. This stationary voltage can be used to determine second up to five subsequent reference levels. Again margins can be used to prevent erroneous detection. The various detection comparisons or messages may be combined to produce accurate fault messages pertaining to specific fault situations.

The object is also achieved in a second aspect of the invention, in a system for testing the termination of a differential serial communication bus, wherein the serial communication bus may comprise a first signal line for carrying a first electrical signal modulated on a first voltage base level and a second signal line for carrying a second electrical signal modulated on a second voltage base level, and wherein in use a differential signal between the first and the second signal is indicative of a serial digital signal being transferred on the communication bus, wherein the bus may be fit for termination by a bus terminator of the open-line fail-safe type or the open-line and closed-line fail-safe type, and wherein the system may comprise at least one controller having a first and a second analog input and a differential communication port, having an first serial port and a second serial port, whereby the first serial port is connected to the first signal line and the second signal port is connected to the second signal line of the serial communication bus, the system further comprising a controllable switch, wherein the first analog input is connected the first line and the second input is connected to the second line, and wherein the switch is controllable by the at least one controller, and the switch is arranged, when activated by the at least one controller, to connect a load between the first and second line, and wherein the at least one is controller arranged to perform the steps of the previously described method, according to the first aspect of the invention.

An embodiment of the system according to the second aspect of the invention may further comprise a timer, cooperating with the at least one controller whereby the timer triggers the at least one controller to perform the steps of the method, according to the first aspect of the invention.

A further embodiment of the system according to the second aspect of the invention may further comprise user control means, connected to and cooperating with the at least one controller, whereby the user control means triggers the at least one controller to perform the steps of the method according to the first aspect of the invention.

A further embodiment of the system according to the second aspect of the invention may further comprise a system trigger input, connected to and cooperating with the at least one controller, whereby the system trigger input triggers the at least one controller to perform the steps of the method according to the first aspect of the invention.

In a further embodiment of the system according to the second aspect of the invention the at least one controller may have message output means, whereby the at least one controller is arranged to communicate messages pertaining to at least one of the first, the second, the third, the fourth, the fifth and the sixth incorrect termination signal.

The object is also achieved in a third aspect of the invention, in a bus master module for use in a system as described above, which may comprising a first controller), and which may be arranged for performing the step of setting the serial communication bus in an idle state, whereby the first controller is further arranged for subsequently initiating the steps of electrically connecting a test load between the first signal line and the second signal line, measuring a first voltage on the first signal line, measuring a second voltage on the second signal line, determining a first voltage difference from the first and second voltage, comparing) the first voltage difference with a reference level, generating an incorrect termination signal if the first voltage difference is below the reference level.

The object is also achieved in a fourth aspect of the invention, in a test module for use in a system as described above, which may comprise a first controller, whereby the first controller is operatively connected to a second controller, whereby the second controller may be arranged to perform the step of setting the serial communication bus in an idle state, and whereby the first controller may be arranged to subsequently perform the steps of electrically connecting a test load between the first signal line and the second signal line measuring a first voltage on the first signal line, measuring a second voltage on the second signal line, determining a first voltage difference from the first and second voltage, comparing the first voltage difference with a reference level, generating an incorrect termination signal, if the first voltage difference is below the reference level.

BRIEF DESCRIPTION OF THE DRAWINGS

Figure 1A shows a differential serial communication bus with "open-line fail-safe" termination, according to the state of the art.

Figure 1B shows a differential serial communication bus with "open-line and shorted-line fail-safe" termination, according to the state of the art.

Figure 2 shows a system for testing the termination of a differential serial communication bus, according to an embodiment of the invention.

Figure 3 shows a flow diagram of a method for testing the termination of a differential serial communication bus, according to an embodiment of the invention.

Figure 4 shows a flow diagram of a method for testing the termination of a differential serial communication bus, according to a further embodiment of the invention.

DESCRIPTION

Termination of a differential serial communication bus is normally achieved by placing a terminating impedance at both ends of the bus. Normally this impedance is a resistor having a resistance equal to the characteristic impedance of the data signal lines carrying the differential signal. In a electrically rugged environment however this may not be sufficient. In that case it may be desirable to have the bus in a defined state when the bus is in a high impedance state, that is no transmitter claims the bus for a transmission.

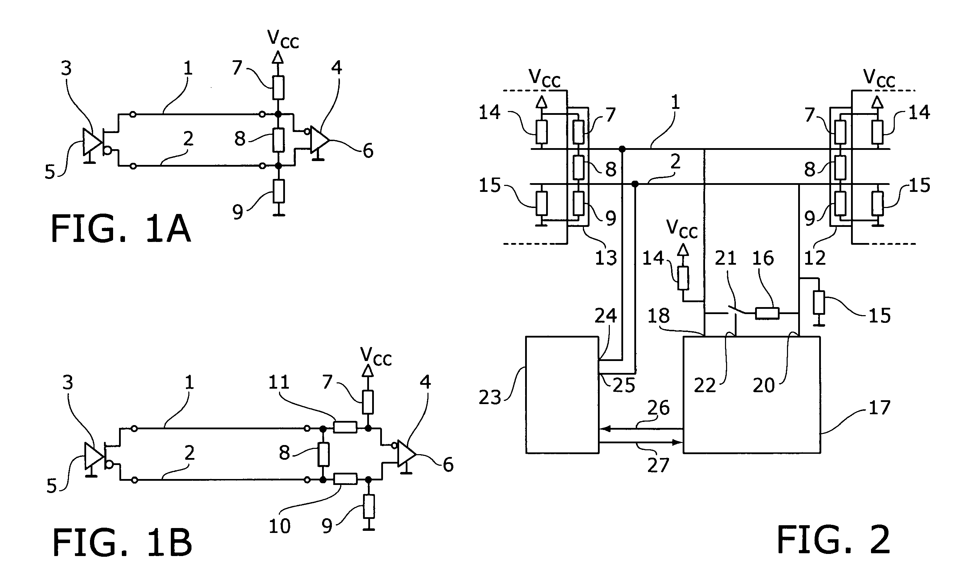

Figure 1A shows a differential serial communication bus with an open-line fail-sage termination, the termination comprising resistors 7, 8 and 9, whereby the resistors are dimensioned such that the serial signal lines on 2 are characteristically determinated and when the bus is in ideal state, the voltage between the signal lines 1, 2, that is the input voltage for receiver 4, and whereby transmitter 3 is in high impedance state, is approximately 200 millivolts. Such a termination of a serial differential communication bus is used for example in a commercially available control system Profibus.

Figure 1B shows a variant of the open-line fail-safe termination, whereby resistors 10, 11 are paced in a ladder fashion between resistors 7, 8 and 8, 9. This configuration ensures that when there is a short circuit between the signal lines 1, 2, there is still a residual voltage of approximately 200 millivolts at the input of receiver 4. The effect of this is that the output 6 of receiver 4 will be stable, i.e. not generate noise even when a short circuit exists between the signal lines 1,2.

Figure 2 shows a system for testing the termination of a differential serial communication bus according to the invention. In this configuration normally two terminators 12, 13 are present both having resistors 7, 8 and 9, as shown in Figure 1A. These terminators 12, 13 may be used in combination with modules which operate on the serial bus 1, 2.

The modules may have internal resistance 14 for pull up to the supply voltage and resistor 15 for pull down to ground ensuring that even if there is no termination or no signal lines 1, 2 connected the outputs or inputs of the functional modules have a defined state. The internal resistors 14, 15 have a typical value of hundreds of kilo-Ohms.

Connected to the signal lines 1, 2 is a controller 17. The controller 17 has a first analog input 18 connected to signal line 1 and a second analog input 20 connected to signal line 2. Controller 17 further has a digital output 22 whereby output 22 is connected to a controllable switch 21. The contacts of controllable switch 21 are connected in series with a test load 16, so that controllable switch 21 can connect the test load between the signal lines 1 and 2.

The controllable switch 21 may be a relay or a solid state controllable switch or the like.

A controller 17, 23 can for example be a microprocessor including its control logic, including analog and/or digital I/O circuitry or a microcontroller which may incorporate the control logic and analog and/or digital I/O circuitry.

The system may also comprise a second controller 23, which is connected to the serial communication bus 1, 2 via serial port 24, 25, and which can communicate with controller 17 via control lines 26, 27. Second controller 23 can have the role of bus master, which means that it is able to set the serial communication bus in an idle state. Controller 23 can do this by setting its serial port 24, 25 in a high impedance state. Other (slave) controllers will not make a transmission on the bus, since they are not requested by the bus master to do so. It is also possible that controllers 17, 23 are integrated into a single controller.

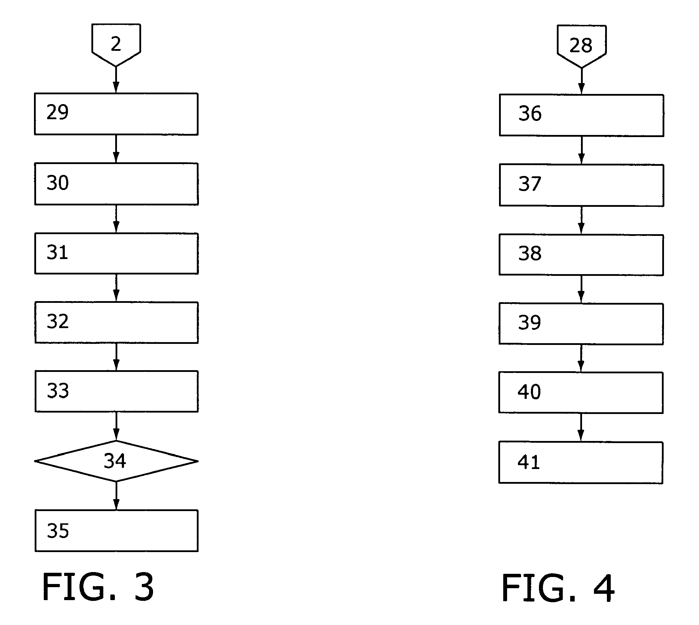

Controller 23 may initiate a sequence for testing the correct termination of the serial communication bus 1, 2. In order to do this, controller 23 will execute a computer program which may be programmed into the controller or which may be loaded into a memory which can be accessible by controller 23. The computer program and the controller 23 are arranged such that the steps of a process or a method according to Figure 3 will executed .

Step 28 represents the start of the process which may comprise an event like a system reset, the time out of a timer or a user command, or any other instruction which may be generated inside or outside the controller 23. After process initiation 28, the first step is to set the serial communication bus in an ideal mode. Using control line 27, controller 17 may now be triggered to electrically connect test load 16 between the signal lines 1, 2 of the serial communication bus 1, 2, using controllable switch 21. Controller 17 will now perform step 31 measuring the voltage on the signal line 1 of the serial communication bus 1, 2. The controller will now perform step 32 measuring the voltage on the signal line 2 of the serial communication bus 1, 2. The controller determines in step 33 the difference between the voltage measured on the first and the second signal line 1, 2. Controller 17 compares in step 34 the voltage difference with a reference level. If the voltage difference is below the reference level, controller 17 may signal the situation or send a message to controller 23 using line 26.

The reference level can be previously determined as follows:

in a normal situation when the serial communication bus 1, 2 is correctly terminated by two terminators 12, 13, and with the bus 1,2 in ideal mode, the voltage difference between signal line 1 and signal 2 is determined by the voltage divider comprising two resistors 7 in parallel, two resistors 8 in parallel, two resistors 9 in parallel. The difference voltage can be evaluated from equation 1:

$$\Delta V \ = \ V_1 - V_2 \ = \ \frac{R8 / /R8}{R7 / /R7 + R8 / /R8 + R9 / /R9} \cdot V_{cc} \quad \text{(Equation 1)},$$

wherein:

$\Delta V$ is the voltage difference between the signal lines 1, 2,
$V_1$ is the voltage of signal line 1,
$V_2$ is the voltage on signal line 2,
R7, R8 and R9 refer to the resistors with references 7, 8 and 9 respectively,
// is the parallel operation, for abbreviating the equation for having two impedances in parallel.

With a typical supply voltage Vcc of 5 Volts and resistor 7 of 390 Ohm, resistor 8, 220 Ohm and resistor 9 of 390 Ohm, the typical voltage difference is 1.1 Volts. It should be noted that the voltage difference measured between the signal lines 1,2 will remain the same for one or two terminators 12, 13 connected, as long as controllable switch 21 is open.

If the controllable switch 21 is closed, and test load 16 is connected in parallel with resistors 8 of the terminators 12, 13, wherein the resistance of test load 16 equals 220 Ohm, the voltage difference between signal lines 1, 2 is determined by a voltage divider having resistors 7 in parallel, resistors 8 and test loads 16 in parallel and resistors 9 in parallel. The voltage difference between signal lines 1,2 can now be established from equation 2:

$$\Delta V = V_1 - V_2 = \frac{R8 / / R8 / / R16}{R7 / / R7 + R8 / / R8 / / R16 + R9 / / R9} \cdot V_{cc} \quad \text{(Equation 2)}$$

The voltage difference between the signal lines 1, 2 with controllable switch 21 closed is now typically 0,8 Volts, using the same typical values for resistors 7, 8, 9, for Vcc and wherein resistor 16 typically also equals 220 Ohms.

If one of the terminators 12, 13 is missing, the voltage difference between signal lines 1, 2 is determined by a single resistor 7, a single resistor 8 in parallel with test load 16, and a single resistor 9. The voltage difference between signal lines 1,2 can now be established from equation 3:

$$\Delta V = V_1 - V_2 = \frac{R8 / / R16}{R7 + R8 / / R16 + R9} \cdot V_{cc} \quad \text{(Equation 3)}$$

Consequently the voltage difference will be less than 0.8, typically this voltage is 0.6 Volts. If both terminators 12, 13 are missing the voltage difference between signal lines 1, 2 is close to 0 Volts since then, the test load 16 is connected between the signal lines 1,2 and test load 16 has a much lower resistance compared to internal resistances 14, 15.

If one terminator 12 or 13 is unpowered, due to a bad connection, or malfunction of one of the resistors 7, the voltage difference between signal lines 1, 2 can now be determind by equation 4:

$$\Delta V = V_1 - V_2 = \frac{R8 / / R8 / / R16}{R7 + R8 / / R8 / / R16 + R9 / / R9} \cdot V_{cc} \quad \text{(Equation 4)}$$

Typically the voltage difference would now be approximately 0.4 Volts. This means that, while taking a margin of for example 0.1 Volts, if the voltage difference between lines 1, 2 is less than 0.8 - 0.1 = 0.7 Volts, there is at least one terminator missing. If the voltage is less than 0.6 - 0.1 = 0.5 Volts there is eighter no terminator 12, 13 present or one of the terminators 12,13 is unpowered. If the voltage is less than 0.4 - 0.1= 0.3, none of the terminators 12, 13 are present.

According to an embodiment of the invention, the reference level for each situation may be determined in a calibration mode by measuring using reference terminators 12, 13 prior to the actual testing of the correct termination of the serial communication bus. A method for this purpose is shown in figure 4. In step 36, the serial communication bus 1,2 is set in idle mode. Now, in step 37, reference terminators 12, 13, can be connected. The reference terminator are previously checked to have the correct termination resistors 7, 8 and 9. In step 38 the voltage on the first signal line 1 is measured. In step 39, the voltage on the second signal line 2 is measured. In step 40, the difference voltage between signal lines 1 and 2 is determined.

In step 41 the first reference level for determining an anomaly in bus termination may be established in step by taking the difference voltage and subtracting a margin. Thus, in a subsequent testing of the bus in a live situation, if the then measured voltage difference (in step 34) is below the determined reference level is described in this paragraph, a corresponding message can be generated.

The reference terminators 12,13 can reflect different fault situations. For example, if only a single standard terminator 12, 13 is applied, this would reflect the situation with one terminator 12, 13 missing. In another example, a terminator 12, 13 may have a loose connection with the supply voltage. A person skilled in the art will know which faults may occur and which modifications may be necessary to perform on a terminator 12, 13 to reflect these faults.

According to a further embodiment of the invention, the reference level may be determined by measuring the difference voltage while applying the test load 16 to the signal lines 1,2. The measured voltage difference is now applicable as a reference level in a test situation. This is particularly useful when for design reasons it is necessary to change the resistor values 7, 8, and 9. The reference level can now be determined dynamically. To prevent errors, i.e. false hits, it may be necessary to reduce the level with a margin.

Fault situations can also be detected using the single voltages measured on signal lines 1, 2. For example a short circuit in one of the resistors 7 or if signal line 1 is shorted to the power supply, this, will result in a measured voltage of signal line 1 equal to the supply voltage Vcc. If the supply voltage Vcc = 5 V, then the voltage measured on the first signal line 1 also equals 5 V. The first signal line may also be shorted to ground, so consequently a voltage of 0 V will be measured. Like wise if the second signal line is shorted to the power supply, a voltage of 5 V may be measured, whereas a resistor 9 has a short circuit or if signal line 2 is shorted to ground, 0 V will be measured. Subsequently corresponding signals or messages may be generated by controller 17. It should be clear that it is also possible that controller 17 only measures the voltages on the signal lines 1,2, communicated these voltages to controller 23, whereby controller 23 determines any fault situation and/or generate corresponding incorrect termination messages.

The reference levels for comparing the single line voltages can be previously calculated, or be determined in a calibration stage.

Controller 17 can communicate with controller 23 using control lines 26 or 27, which can be performed by a level signal, a trigger pulse, or by serial communication. The controllers 16 and 23 may be housed or packaged in different modules in a control system using the serial communication bus 1,2. The control lines 26, 27 may be part of the serial communication bus or be separately wired.

In a control system using the serial communication bus 1,2, controller 23 or controller 23 and 17 combined may be incorporated in a bus master module. It is usually the bus master module who is capable of setting the serial communication bus 1,2 in an idle mode. Controller 17 may be incorporated in a dedicated termination test module for performing the steps of measuring and controlling the controllable switch. The dedicated termination test module also has the test load incorporated in it.

It should be clear that the invention is explained in the above description by way of example only, and that variations are possible without departing from the teaching of the invention and without falling out of the scope of protection as laid down in the appended claims.

## Claims

1. Method of testing the termination of a differential serial communication bus (1,2), the serial communication bus (1,2) comprising a first signal line (1) for carrying a first electrical signal modulated on a first voltage base level, and a second signal line (2) for carrying a second electrical signal modulated on a second voltage base level, wherein the bus is fit for termination by a bus terminator (12, 13) of the open-line fail-safe type or the open-line and closed-line fail-safe type, the method comprising the steps of:

   • setting (29) the serial communication bus (1,2) in an idle-mode;
   • electrically connecting (30) a test load (16) between the first signal line (1) and the second signal line (2);
   • measuring (31) a first voltage on the first signal line (1);
   • measuring (32) a second voltage on the second signal line (2);
   • determining (33) a first voltage difference from the first and second voltage;
   • comparing (34) the first voltage difference with a first reference level;
   • generating (35) an incorrect termination signal if the first voltage difference is below the first reference level.

2. The method of claim 1, wherein the steps of comparing (34) the first voltage difference with a reference level, and generating (35) an incorrect termination signal if the first voltage difference is below the first reference level may be repeated as a group using a plurality of different reference levels.

3. The method of claim 1 or 2, further comprising the steps of and preceding the step of setting (29) the serial communication bus (1,2) in an idle-mode:

   • setting (36) the serial communication bus (1,2) in the idle-mode;
   • connecting (37) no or at least one reference bus terminator (12,13) to the serial communication bus (1,2);
   • measuring (38) a third voltage on the first signal line (1);
   • measuring (39) a fourth voltage on the second signal line (2);
   • determining (40) a second voltage difference from the third and fourth voltage;
   • determining (41) the reference level from the second voltage difference.

4. The method according to claim 3, further comprising the step of:

   • electrically connecting the test load (16) between the first signal line (1) and the second signal line (2).

5. The method of claim 2 and 3 or of claim 2 and 4, wherein the steps of claim 3 or 4 are repeated to determine the plurality of different reference levels, and whereby in each repetition, the no or at least one reference terminator (12,13) is changed.

6. The method of any of the claims 1 - 5, further comprising the steps of:

  • comparing the first voltage on the first signal line (1) with a second reference level;
  • generating a third incorrect termination signal if the first voltage is below the second reference level.

7. The method of any of the claims 1 - 6, further comprising the steps of:

  • comparing the first voltage on the first signal line (1) with a third reference level;
  • generating a third incorrect termination signal if the first voltage is above the third reference level.

8. The method of any of the claims 1 - 7, further comprising the steps of:

  • comparing the second voltage on the second signal line (2) with a fourth reference level;
  • generating a fourth incorrect termination signal if the second voltage is below the fourth reference level.

9. The method of any of the claims 1 - 8, further comprising the steps of:

  • comparing the second voltage on the second signal line (2) with a fifth reference level;
  • generating a fifth incorrect termination signal if the second voltage difference is above the fifth reference level.

10. The method according to any of the preceding claims, further comprising the step of:

  • triggering to start (28) the method for testing the termination of a differential serial communication bus (1,2).

11. The method according to claim 10, wherein the step of triggering comprises periodically triggering at predetermined intervals or at fixed times and/or dates.

12. The method according to claim 10, wherein the step of triggering comprises triggering by user control means.

13. The method according to claim 10, wherein the step of triggering comprises triggering by a system trigger such as a system reset.

14. System for testing the termination of a differential serial communication bus (1,2), the serial communication bus (1,2) comprising a first signal line (1) for carrying a first electrical signal modulated on a first voltage base level and a second signal line (2) for carrying a second electrical signal modulated on a second voltage base level, wherein the bus (1,2) may be fit for termination by at least one bus terminator (12, 13) of the open-line fail-safe type or the open-line and closed-line fail-safe type, the system comprising at least one controller (17,23) having a first and a second analog input (18, 20) and a differential communication port (24,25), having an first serial port (24) and a second serial port (25), whereby the first serial port (24) is connected to the first signal line (1) and the second signal port (25) is connected to the second signal line (2) of the serial communication bus (1,2), the system further comprising a controllable switch (21), wherein the first analog input (18) is connected the first signal line (1) and the second input (20) is connected to the second signal line (2), and wherein the switch (21) is controllable by the at least one controller (17,23) , and whereby the switch (21) is arranged, such that when activated by the at least one controller, to connect a test load (16) between the first and second line, and wherein the at least one is controller (17,23) arranged to perform the steps of a method according to any of the claims 1 - 13.

15. The system according to claim 14, further comprising a timer cooperating with the at least one controller (17,23), whereby the timer triggers the at least one controller (17,23) to perform the steps of the method of claim 11.

16. The system according to claim 14 or 15, further comprising user control means, connected to and cooperating with the at least one controller (17,23), whereby the user control means triggers the at least one controller (17,23) to perform the steps of the method of claim 10.

17. The system according to any of the claims 14 - 16, further comprising a system trigger input, connected to and cooperating with the at least one controller (17,23), whereby the system trigger input triggers the at least one controller (17,23) to perform the steps of the method of claim 11.

18. The system according to any of the claims 14 - 17, wherein the at least one controller (17,23) has message output means, and whereby the at least one controller (17,23) is arranged to communicate messages pertaining to at least one of the first, the second, the third, the fourth, the fifth incorrect termination signal.

19. Bus master module for use in a system according to any of the claims 14 - 19, comprising a first controller (23), arranged for performing the step of:

   • setting the serial communication bus (1,2) in an idle state,

   whereby the first controller (23) is further arranged for subsequently initiating the steps of:

   • electrically connecting (30) a test load (16) between the first signal line (1) and the second signal line (2);
   • measuring (31) a first voltage on the first signal line (1);
   • measuring (32) a second voltage on the second signal line (2);
   • determining (33) a first voltage difference from the first and second voltage;
   • comparing (34) the first voltage difference with a reference level;
   • generating (35) an incorrect termination signal if the first voltage difference is below the reference level.

20. Test module for use in a system according to any of the claims 14 - 19, comprising a first controller (17), whereby the first controller (17) is operatively connected to a second controller (23), whereby the second controller (23) is arranged to perform the step of:

   • setting the serial communication bus (1,2) in an idle state;

   and whereby the first controller (17) is arranged to subsequently perform the steps of:

   • electrically connecting (30) a test load (16) between the first signal line (1) and the second signal line (2);
   • measuring (31) a first voltage on the first signal line (1);
   • measuring (32) a second voltage on the second signal line (2);
   • determining (33) a first voltage difference from the first and second voltage;
   • comparing (34) the first voltage difference with a reference level;
   • generating (35) an incorrect termination signal if the first voltage difference is below the reference level.

FIG. 2

FIG. 1A

FIG. 1B

EP 1 962 452 A1

```
        ┌──┐                              ┌──┐
        │ 2│                              │28│
        └┬─┘                              └┬─┘
         ▼                                 ▼
  ┌─────────────┐                  ┌─────────────┐
  │ 29          │                  │ 36          │
  └──────┬──────┘                  └──────┬──────┘
         ▼                                 ▼
  ┌─────────────┐                  ┌─────────────┐
  │ 30          │                  │ 37          │
  └──────┬──────┘                  └──────┬──────┘
         ▼                                 ▼
  ┌─────────────┐                  ┌─────────────┐
  │ 31          │                  │ 38          │
  └──────┬──────┘                  └──────┬──────┘
         ▼                                 ▼
  ┌─────────────┐                  ┌─────────────┐
  │ 32          │                  │ 39          │
  └──────┬──────┘                  └──────┬──────┘
         ▼                                 ▼
  ┌─────────────┐                  ┌─────────────┐
  │ 33          │                  │ 40          │
  └──────┬──────┘                  └──────┬──────┘
         ▼                                 ▼
     ◇ 34 ◇                        ┌─────────────┐
         ▼                         │ 41          │
  ┌─────────────┐                  └─────────────┘
  │ 35          │
  └─────────────┘
```

# FIG. 3        FIG. 4

**European Patent Office**

**EUROPEAN SEARCH REPORT**

Application Number

EP 07 07 5145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/104757 A1 (VARGAS ROY L [US]) 3 June 2004 (2004-06-03) * abstract * | 1-5, 10-20 | INV. H04L1/24 H04L25/02 |
| Y | * paragraphs [0006] - [0010], [0036] - [0043]; figures 3,4 * ----- | 6-9 | |
| Y | US 6 535 028 B1 (BAKER KEITH RONALD [US]) 18 March 2003 (2003-03-18) * abstract * * column 1, lines 43-60 * * column 2, lines 26-62 * | 6-9 | |
| A | * column 3, lines 11-16 * ----- | 1-5, 10-20 | |
| A | DE 101 03 115 A1 (SIEMENS AG [DE]) 8 August 2002 (2002-08-08) * paragraphs [0001], [0003] - [0005], [0008], [0020], [0021], [0032] - [0034] * ----- | 1,14,19, 20 | |

TECHNICAL FIELDS SEARCHED (IPC)

H04L
H04B
G01R

The present search report has been drawn up for all claims

| Place of search | Date of completion of the search | Examiner |
|---|---|---|
| The Hague | 4 July 2007 | Miclea, Sorin |

EPO FORM 1503 03.82 (P04C01)

## ANNEX TO THE EUROPEAN SEARCH REPORT
## ON EUROPEAN PATENT APPLICATION NO.

EP 07 07 5145

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2007

| Patent document cited in search report | | Publication date | Patent family member(s) | | Publication date |
|---|---|---|---|---|---|
| US 2004104757 | A1 | 03-06-2004 | NONE | | |
| US 6535028 | B1 | 18-03-2003 | CA | 2409589 A1 | 12-05-2003 |
| | | | EP | 1311089 A2 | 14-05-2003 |
| | | | ZA | 200208933 A | 04-05-2004 |
| DE 10103115 | A1 | 08-08-2002 | NONE | | |

EPO FORM P0459

For more details about this annex : see Official Journal of the European Patent Office, No. 12/82